# FASCICULE DE BREVET EUROPEEN

(11) **EP 0 822 168 B1**
(45) Date de publication et mention de la délivrance du brevet: **29.08.2001**
(21) Numéro de dépôt: 97401745.1
(22) Date de dépôt: 21.07.1997
(51) Int. Cl.: C03B 37/018

(54) **Préforme de fibre optique et son procédé de fabrication**
Vorform für optische Fasern und Verfahren zu ihrer Herstellung
Preform for optical fibres and process for its manufacture

(30) Priorité: 31.07.1996 FR 9609647
(43) Date de publication de la demande: 04.02.1998
(73) Titulaire: ALCATEL, 75008 Paris (FR)
(72) Inventeur: Robin, Thierry, 92600 Asnieres (FR); Chariot, Jean-François, 78160 Marly Le Roi (FR)
(74) Mandataire: Vigand, Privat

(56) Documents cités:
- EP-A- 0 301 797
- DE-A- 3 430 197
- PATENT ABSTRACTS OF JAPAN vol. 5, no. 194 (C-82), 10 décembre 1981 & JP 56 114842 A (FUJITSU CO., LTD.), 9 septembre 1981,
- A.HORDVIK ET AL.: "A method for reducing the conicalness of the core diameter in preforms made by the MCVD process" ECOC VII : CONFERENCE PROCEEDINGS, 8 - 11 septembre 1981, COPENHAGUE, DK, pages 1.3-1-1.3-4, XP002027122
- PATENT ABSTRACTS OF JAPAN vol. 6, no. 143 (C-117), 3 août 1982 & JP 57 067041 A (NT&T CORP.), 23 avril 1982,

## Description

L'invention est relative à une préforme de fibre optique, et à un procédé de fabrication de cette préforme.

Une fibre optique est en général réalisée en silice ; son diamètre est de 125 microns (*µ*m) environ.

La silice d'une fibre optique multimode est dopée. Le dopage, par exemple au germanium, est le plus élevé au centre, c'est-à-dire sur l'axe longitudinal, et il décroît depuis le centre vers la périphérie. De cette manière l'indice de réfraction n est le plus élevé au centre, où sa valeur est d'environ 1,48, et il est le plus faible à la périphérie, où sa valeur est d'environ 1,45, qui est l'indice de la silice pure.

Les performances de la fibre dépendent de la qualité et de la régularité du profil d'indice. La bande passante est élevée si le profil d'indice est régulier, c'est-à-dire si l'indice de réfraction varie de façon continue ou quasi-continue, depuis le centre vers la périphérie et si la courbure de ce profil est choisie correctement. En outre, la bande passante dépend de l'homogénéité longitudinale du profil d'indice. Toute déviation par rapport à ces conditions - c'est-à-dire si le gradient d'indice présente des discontinuités et/ou n'est pas homogène en direction longitudinale - entraîne une réduction de la bande passante. Enfin des oscillations ou ondulations du profil d'indice peuvent altérer la bande passante dans une moindre mesure.

Pour fabriquer une fibre optique présentant un gradient d'indice satisfaisant on procède de la façon suivante : on part d'un tube en silice pure, par exemple de diamètre extérieur compris entre 28 et 36mm et de diamètre intérieur compris entre 24 et 32mm, et on dépose sur la paroi interne, des couches successives dont le dopage augmente du début (le plus grand diamètre) à la fin (le plus petit diamètre). Le nombre de couches est en général de plusieurs dizaines.

Le procédé utilisé est un procédé appelé MCVD, c'est-à-dire "Modified Chemical Vapor Deposition" (procédé modifié de dépôt chimique en phase vapeur).

Pour déposer la première couche, on fait circuler à l'intérieur du tube de silice un courant de tétrachlorure de silicium SiCl₄ avec de l'oxygène, ou un autre oxydant, et on chauffe, de préférence par l'extérieur, le tube de silice. Le chauffage est effectué sur une longueur relativement faible ; pour former la couche sur la plus grande partie du tube on déplace le dispositif de chauffage depuis l'entrée vers la sortie du tube. En général on fait tourner ce tube autour de son axe au cours de la mise en oeuvre du procédé.

Le chauffage provoque l'oxydation du tétrachlorure de silicium et on obtient donc de la silice SiO₂ et un dégagement de chlore. La silice se dépose sur la paroi interne du tube et constitue la première couche.

Les couches suivantes sont réalisées de la même manière, mais, pour ces couches, le gaz contient, en plus, du tétrachlorure de germanium pour effectuer le dopage. La quantité de tétrachlorure de germanium varie de la deuxième à la dernière couche de façon à obtenir le dopage - et donc l'indice - désiré pour chaque couche.

Après le dépôt de la dernière couche, il subsiste une ouverture axiale que l'on fait disparaître grâce à une opération de rétreint qui consiste essentiellement en un chauffage du tube. On obtient alors un cylindre plein d'un diamètre extérieur de l'ordre de 2 centimètres et d'une longueur d'environ un mètre. Ce cylindre, ou barreau, est appelé une préforme primaire. Cette préforme primaire est ensuite, généralement, couverte (ou "rechargée") de silice de façon à obtenir le diamètre voulu, par exemple 3 à 4 centimètres.

Les fibres optiques proprement dites sont fabriquées par étirage à partir de telles préformes. Ainsi une préforme, d'une longueur d'un mètre environ avec un diamètre extérieur de 3 centimètres, fournit de l'ordre de 50 kilomètres de fibre optique de diamètre 125 microns.

Le procédé de fabrication d'une préforme qui a été exposé ci-dessus est par exemple décrit dans la demande de brevet européen 301 797.

On a constaté que, lors de la fabrication d'une préforme par le procédé MCVD, une partie importante de la longueur de la préforme présente un profil d'indice qui diffère du profil sur le reste de la longueur de cette préforme. Cette inhomogénéité longitudinale entraîne une réduction de la bande passante des fibres optiques réalisées à partir de cette partie de la préforme. L'inhomogénéité du profil d'indice par rapport au reste de la longueur se manifeste du côté de l'introduction des gaz, à la suite d'une première partie, en partant de l'entrée, sur laquelle les dépôts sont insuffisants. Cette première partie a une longueur d'environ une quinzaine de centimètres. La deuxième partie, qui présente une courbure du profil d'indice qui est variable et est différente de la courbure correspondante sur le reste de la préforme, s'étend par exemple sur environ dix à quinze centimètres après la première partie. L'inhomogénéité du gradient de dopage ou d'indice de la deuxième partie par rapport au reste affecte la bande passante de la fibre obtenue à partir de cette partie ou à partir du reste de la préforme. En résumé : environ 15% de la préforme est inutilisable et une proportion au moins égale - voire largement supérieure - de cette longueur présente une inhomogénéité de profil d'indice par rapport au reste de la préforme, ces valeurs n'étant données qu'à titre indicatif. Quoiqu'il en soit, on a constaté que l'inhomogénéité indiquée ci-dessus augmente avec la section des couches déposées. Cet inconvénient est particulièrement gênant aujourd'hui car on cherche à obtenir des préformes de diamètres de plus en plus importants.

Une préforme de fibre optique multi-mode selon l'invention est caractérisée en ce qu'elle est dépourvue de la seconde longueur à bande passante différente. Cette préforme présente ainsi seulement deux parties, à savoir une partie d'entrée, inutilisable, à dépôts insuffisants et le reste du tube le long duquel le gradient radial d'indice de réfraction reste le même d'un bout à l'autre.

L'invention concerne également un procédé de fabrication d'une telle préforme, comme indiqué dans la revendication 1, et un procédé de fabrication d'une fibre optique multi-mode, comme indiqué dans la revendication 11. De préférence la vitesse d'introduction des gaz varie peu ou est sensiblement constante pour toutes les couches.

L'invention part de la constatation que, dans les procédés connus de fabrication d'une préforme de fibre optique multimode, la vitesse des gaz introduits dans le tube varie de façon notable entre la première et la dernière couche déposées et que c'est cette variation importante de vitesse qui provoque la formation de ladite seconde partie du tube le long de laquelle le profil d'indice a une courbure différente de la courbure du même profil sur la dernière partie du tube.

La formation de la partie de profil d'indice à courbure différente peut s'expliquer de la façon suivante : les gaz qui sont introduits dans le tube, avec une certaine vitesse v en direction axiale, commencent à produire des dépôts sur la paroi interne du tube seulement à partir d'une abscisse qui est une fonction directe de la vitesse v et du rayon de la paroi exposée aux gaz. Ainsi, lors de la réalisation des premières couches, pour lesquelles la vitesse v est la plus élevée, le début des dépôts s'effectue à une distance la plus grande de l'entrée du tube. Pour les dernières couches, pour lesquelles la vitesse v d'introduction des gaz est la plus faible, le début des dépôts s'effectue à une distance de l'entrée du tube qui est sensiblement plus faible.

Par contre, avec l'invention, la vitesse v d'introduction des gaz étant contrôlée, on pense que l'on peut obtenir que l'abscisse de départ des couches reste toujours la même.

Toutefois, l'invention n'est pas limitée à cette explication. Il n'est pas indispensable que l'abscisse de départ des couches reste toujours la même.

Pour contrôler la vitesse d'entrée des gaz, tout en conservant l'homogénéité longitudinale du profil radial, dans un mode de réalisation on fait varier le débit d'oxygène (ou d'un autre agent oxydant) d'une couche à une autre. Contrairement au procédé connu on ne s'impose pas la contrainte d'un débit d'oxygène tel qu'il permette des rendements de réaction constants.

Par rapport au procédé antérieurement connu cette variation du débit d'oxygène entraîne la nécessité - afin de conserver le profil voulu - de faire varier le débit des gaz générateurs de silice et de germanium (le produit dopant) et cela afin de conserver la qualité du profil. L'expérience a cependant montré que ces variations de débits des gaz générateurs de silice et de germanium ont des effets relativement faibles sur la vitesse des gaz, ce qui rend le contrôle de la fabrication relativement aisé.

Autrement dit, bien que les débits des gaz générateurs de silice et de germanium, et donc les paramètres des couches, soient liés à la vitesse v d'introduction de ces gaz, on peut, malgré tout, contrôler cette vitesse v car les variations des débits des gaz générateurs agissent seulement au second ordre sur les vitesses des gaz.

D'autres caractéristiques et avantages de l'invention apparaîtront avec la description de certains de ses modes de réalisation, celle-ci étant effectuée en se référant aux dessins ci-annexés sur lesquels :

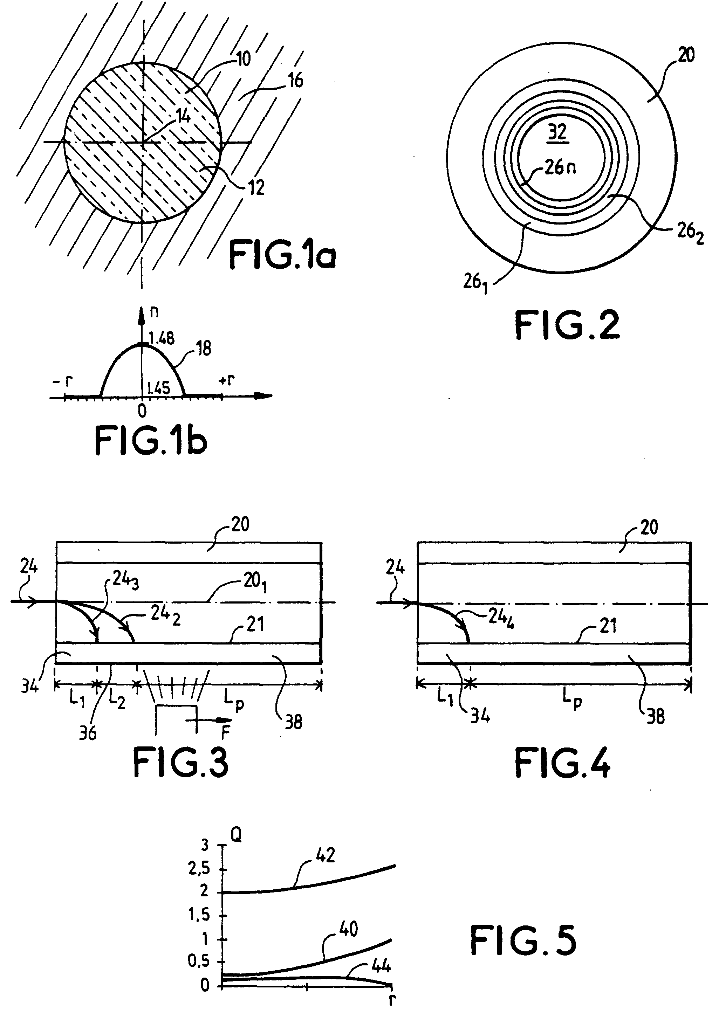

la figure 1ₐ est un schéma d'une section d'une fibre optique,
la figure 1_{b} est un diagramme représentant la variation, en direction radiale, de l'indice de réfraction à l'intérieur de la fibre de la figure 1ₐ,
la figure 2 est un schéma en section d'une préforme de fibre optique, en cours de fabrication,
la figure 3 est un schéma d'un procédé de fabrication d'une préforme de l'état antérieur de la technique,
la figure 4 est un schéma illustrant la préforme et le procédé selon l'invention, et
la figure 5 est un diagramme se rapportant au procédé selon l'invention.
la figure 1ₐ est un schéma en coupe d'un conducteur optique à fibre multimode. La fibre optique 10 a un diamètre d'environ 125 microns. Elle est protégée par un revêtement 12.

La fibre optique multimode 10 doit présenter le profil d'indice de réfraction "n" représenté sur la figure 1_{b}. Sur ce diagramme l'origine "0" correspond au centre 14 de la section, c'est-à-dire à l'axe longitudinal de la fibre 10 et les abscisses "r" et "-r" correspondent à la périphérie 16 de la fibre.

La fibre 10 est fabriquée à partir de silice SiO₂. A la périphérie, la silice SiO₂ est pure. L'indice de réfraction a donc la valeur de 1,45 aux abscisses r et -r et au voisinage de ces abscisses. Par contre, le coeur est dopé au germanium, ce qui modifie l'indice de réfraction. Au centre 14, l'indice a une valeur de 1,48 et cet indice diminue progressivement vers la périphérie, comme représenté par la courbe 18 (figure 1_{b}).

Pour un fonctionnement correct de la fibre optique, et notamment pour une bande passante optimum, il est essentiel que la courbe 18 soit régulière. Il est préférable aussi que cette courbe 18 présente un minimum d'ondulations.

Ce résultat est obtenu par le contrôle de la fabrication de la fibre 10.

Pour fabriquer une telle fibre on procède - de manière en soi connue - de la façon suivante :

On part d'un tube 20 (figure 3) en silice de diamètre intérieur 30mm et de diamètre extérieur 34mm et d'une longueur totale "L" comprise, par exemple, entre 1 mètre et 1,4 mètres. Dans ce tube de silice 20 on introduit, par son extrémité d'entrée 22, des gaz représentés par la flèche 24. On réalise, par le procédé dit MCVD, une pluralité de couches successives 26₁, 26₂, ... 26ₙ dont le dopage varie de la couche 26₁ à la couche 26ₙ (figure 2) de façon à obtenir le profil d'indice 18 représenté sur la figure 1_{b}. La couche 26₁ est la première couche qui est déposée sur la paroi interne 21 du tube 20. Une deuxième couche 26₂ est déposée sur la première, et ainsi de suite.

Dans l'exemple, la section des couches diminue depuis la périphérie 26₁ jusqu'à la couche centrale 26ₙ. Le dopage au germanium est le plus grand pour la couche centrale 26ₙ et diminue vers la périphérie. La première couche 26₁ n'est pas dopée.

En pratique, pour la fabrication de la première couche 26₁, les gaz 24 comprennent uniquement le tétrachlorure de silicium SiCl₄ et l'oxygène. Le procédé consiste à faire réagir l'oxygène et le tétrachlorure de silicium de façon à obtenir de la silice SiO₂ selon la réaction suivante :

SiCl₄ + O₂ SiO_{2 +} 2Cl₂

Les couches suivantes sont obtenues de la même manière, mais on ajoute du tétrachlorure de germanium GeCl₄ pour effectuer le dopage.

Pour obtenir des couches dont la section diminue depuis la périphérie 26₁ jusqu'au coeur 26ₙ en général on diminue le débit total des chlorures d'une couche à la suivante.

Chaque couche est fabriquée progressivement en direction longitudinale, depuis l'ouverture d'entrée 22, jusqu'à l'extrémité de sortie 28 en utilisant un dispositif de chauffage 30 - tel qu'un chalumeau - qui est déplacé de l'entrée 22 vers la sortie 28 dans la direction et le sens de la flèche "F". Ce dispositif de chauffage 30 chauffe donc localement le tube 20 par l'extérieur de manière, d'une part, à déclencher les réactions chimiques de formation de silice SiO₂ et de produit dopant et, d'autre part, à vitrifier les matériaux obtenus.

Pour homogénéiser la fabrication des couches le tube 20 tourne autour de son axe 20₁.

Après réalisation des diverses couches on obtient un produit tubulaire, représenté sur la figure 2, c'est-à-dire qu'il subsiste un trou central 32. On termine la fabrication de la préforme en effectuant un rétreint qui consiste à chauffer l'ensemble du produit de façon à faire disparaître l'ouverture centrale 32.

On a constaté, qu'avec le procédé utilisé jusqu'à présent, la préforme obtenue présentait trois parties le long de son axe : une première partie 34 de longueur L₁ sur laquelle les couches sont inexistantes ou d'une épaisseur faible, une seconde partie 36, de longueur L₂, à peu près égale à la longueur L₁, et pour laquelle le profil d'indice 18 n'est pas optimum, ne répond pas toujours aux spécifications et est souvent proche d'une limite de rejet et, enfin, une troisième partie 38, de longueur L_{P} pour laquelle le profil 18 est d'une qualité pratiquement constante et, en principe, optimale. On a également constaté que la longueur L₂ augmente avec la section déposée et le gradient de section des couches.

La partie 34, de longueur L₁, s'explique (de façon simplifiée) par le fait que les gaz 24 pénètrent dans le tube 20 avec une vitesse v non négligeable qu'il est nécessaire de maintenir pour que ces gaz traversent le tube 20. En conséquence les dépôts solides ne peuvent s'effectuer qu'au-delà d'une abscisse L₁. Après rétreint la partie 34 forme une partie conique ou tronconique de la préforme.

La partie 36 dont le profil 18 d'indice est différent du profil sur la partie 38 a pour origine le fait que la vitesse v des gaz 24 est la plus élevée lors de la fabrication de la première couche 26₁ et la plus faible lors de la fabrication de la dernière couche 26ₙ. Ainsi les dépôts prennent naissance plus près de l'extrémité 22 pour la dernière couche que pour la première couche. La flèche 24₂ représente symboliquement le début de la formation de la première couche 26₁ tandis que la flèche 24₃ représente, également de façon symbolique, le début de la formation de la couche 26ₙ.

La préforme selon l'invention est telle qu'elle ne comporte que deux parties 34 et 38 (figure 4) ; elle est dépourvue de la partie 36.

Pour obtenir une telle préforme, dans un exemple la vitesse d'introduction des gaz 24 est maintenue sensiblement constante au cours de la fabrication des diverses couches 26₁, 26₂, ... 26ₙ. De cette manière la partie 38 commence à l'abscisse L₁.

Ce procédé est illustré par la flèche 24₄ sur la figure 4.

Par "vitesse sensiblement constante" on entend une vitesse qui ne varie pas ou varie peu de la première à la dernière couche. Elle n'est pas obligatoirement strictement constante. On peut par exemple avoir intérêt à la faire croître légèrement entre la première et la dernière couche. En effet, au fur et à mesure du dépôt des couches, le diamètre interne diminue, ce qui a pour conséquence une légère diminution de l'abscisse du début de formation des couches si la vitesse reste constante. Par contre si la vitesse augmente légèrement l'abscisse du début des couches peut rester constante.

Pour garder la vitesse 24₄ des gaz 24 sensiblement constante de la première à la dernière couche, contrairement au procédé antérieurement connu, on fait varier le débit d'oxygène. Cette variation de débit entraîne une variation de dilution. Il va de soi que, pour conserver un profil d'indice satisfaisant, la variation de dilution d'oxygène entraîne une variation, par rapport aux débits utilisés dans les procédés connus, des débits nécessaires des chlorures de silicium et de germanium. Ces variations de débits sont déterminées de façon empirique. On a constaté que, malgré la contrainte supplémentaire imposée par le fait qu'on veut garder constante (ou contrôler) la vitesse des gaz, on pouvait obtenir aisément le profil d'indice voulu. La vitesse v d'introduction des gaz peut être réglée de façon pratiquement indépendante du débit de SiCl₄ et GeCl₄.

De façon générale, on choisit la vitesse des gaz, par exemple grâce au débit d'oxygène, de manière à obtenir une homogénéité longitudinale du profil d'indice.

Sur le diagramme de la figure 5, l'origine des abscisses correspond à l'axe 14 et donc à la dernière couche réalisée. L'abscisse r correspond à la paroi interne 21 et donc à la première couche. En ordonnées, on a porté les débits Q. La courbe 42 représente les variations de débit d'oxygène quand la vitesse v est maintenue constante. Les courbes 40 et 44 représentent les variations de débits, respectivement de SiCl₄ et GeCl₄, dans les mêmes conditions.

Dans cet exemple, le débit 42 d'oxygène diminue avec le rang de la couche. Toutefois, cette diminution s'effectue selon une proportion moins importante que la diminution du débit total des sels.

Bien que l'exemple ait été décrit pour une fibre en silice dopée au germanium, il va de soi que l'invention s'étend aussi à tout autre dopant. En outre, en plus du germanium, on peut prévoir des dopants supplémentaires, par exemple le phosphore.

Dans une variante on ajoute un gaz neutre, tel que l'hélium, aux gaz de la réaction, ce gaz pouvant notamment servir à contrôler la vitesse des gaz.

A la place de l'oxygène on peut également utiliser tout autre produit oxydant permettant la fabrication de silice SiO₂.

L'invention s'applique aussi à la fabrication d'une fibre monomode dans laquelle le profil d'indice est pratiquement rectangulaire. Ainsi, l'invention concerne, de façon générale, un procédé de fabrication d'une fibre optique présentant un indice de réfraction maximum selon l'axe de la fibre et plus faible à sa périphérie, ce procédé consistant notamment à déposer, à l'intérieur d'un tube, des couches successives telles que l'indice de réfraction des premières couches, de plus grand diamètre, soit plus faible que l'indice de réfraction des couches centrales, chaque couche étant formée à partir de gaz qui réagissent entre eux à l'intérieur du tube, et on fait varier les proportions des gaz pour faire varier l'indice, ce procédé étant caractérisé en ce qu'on choisit la vitesse v d'introduction des gaz dans le tube de manière à homogénéiser en direction longitudinale le profil radial d'indice.

## Revendications

1. Procédé de fabrication d'une préforme de fibre optique multi-mode (10) présentant un indice de réfraction (n) maximum selon l'axe (14) de la fibre et plus faible à sa périphérie, ce procédé comprenant, notamment, les étapes suivantes :
à l'intérieur d'un tube (20) on dépose des couches successives (26₁, 26₂, ...26ₙ) dont l'indice de réfraction augmente depuis la première couche, de plus grand diamètre, jusqu'à la couche centrale, chaque couche étant formée à partir de gaz (24) qui réagissent entre eux à l'intérieur du tube (20), et on fait varier les proportions des gaz d'une couche à une autre pour faire varier l'indice,
**caractérisé en ce que** l'on choisit la vitesse v d'introduction des gaz (24) dans le tube (20) de manière à améliorer l'homogénéité en direction longitudinale du profil radial d'indice, les dépôts étant effectués à une distance de l'entrée du tube (20) qui est une fonction de ladite vitesse v d'introduction des gaz et du rayon interne de la paroi dudit tube (20).

2. Procédé selon la revendication 1, **caractérisé en ce que** la vitesse v est maintenue sensiblement la même pour la fabrication de toutes les couches (26₁, ..., 26ₙ).

3. Procédé selon la revendication 1 **caractérisé en ce que** la vitesse v d'introduction des gaz augmente avec le rang de la couche fabriquée.

4. Procédé selon l'une quelconque des revendications 1 à 3 **caractérisé en ce que** le tube (20) est en silice.

5. Procédé selon la revendication 4 **caractérisé en ce que** les gaz comprennent un sel de silicium, un sel de produit dopant, notamment de germanium, et un produit oxydant, de préférence l'oxygène, et en ce que le débit du produit oxydant varie lors de la fabrication des diverses couches.

6. Procédé selon la revendication 5 **caractérisé en ce que**, le débit (40) des sels diminuant avec le rang de la couche, le débit (42) de produit oxydant diminue aussi avec le rang de la couche, mais dans une proportion moins importante que la diminution du débit des sels.

7. Procédé selon la revendication 4 **caractérisé en ce que** les gaz comprennent un sel de silicium, un sel de produit dopant et un produit oxydant tel que l'oxygène et en ce que la vitesse d'introduction des gaz (24) est réglée de façon indépendante du débit (40, 44) des sels de silicium et de produit dopant.

8. Procédé selon l'une quelconque des revendications précédentes, **caractérisé en ce qu**'un gaz neutre est ajouté aux gaz qui réagissent.

9. Procédé selon l'une quelconque des revendications précédentes, **caractérisé en ce que** la vitesse v est choisie pour que l'abscisse (L₁) du début de toutes les couches soit sensiblement constante.

10. Préforme pour la fabrication d'une fibre optique multimode à indice de réfraction qui varie depuis son centre jusqu'à sa périphérie, l'indice de réfraction étant plus élevé au centre, selon l'axe (14), qu'à la périphérie (16), **caractérisé en ce que** cette préforme présente, en direction longitudinale, deux parties (34 et 38), la première partie (34) étant un cône d'entrée et la seconde partie (38) présentant un profil d'indice (18) qui est pratiquement constant sur toute sa longueur.

11. Procédé de fabrication d'une fibre optique multi-mode (10) présentant un indice de réfraction (n) maximum selon l'axe (14) de la fibre et plus faible à sa périphérie, ce procédé comprenant, notamment, les étapes suivantes :
à l'intérieur d'un tube (20), on dépose des couches successives (26₁, 26₂, .... 26ₙ) telles que l'indice de réfraction des premières couches, de plus grand diamètre, soit plus faible que l'indice de réfraction des couches centrales, chaque couche étant formée à partir de gaz (24) qui réagissent entre eux à l'intérieur du tube (20), et on fait varier les proportions des gaz pour faire varier l'indice,
**caractérisé en ce que** l'on choisit la vitesse v d'introduction des gaz (24) dans le tube (20), de manière à améliorer l'homogénéité en direction longitudinale du profil radial d'indice, les dépôts étant effectués à une distance de l'entrée du tube (20) qui est une fonction de ladite vitesse v d'introduction des gaz et du rayon interne de la paroi dudit tube (20).

## Patentansprüche

1. Verfahren zur Herstellung einer Vorform für einen Mehrmoden-Lichtwellenleiter (10), der einen Brechungsindex (n) aufweist, der entlang der Achse (14) der Faser maximal und an ihrem Umfang geringer ist, wobei dieses Verfahren insbesondere die folgenden Schritte umfasst:
im Inneren einer Röhre (20) werden aufeinanderfolgende Schichten (26₁, 26₂, ... 26ₙ) abgeschieden, deren Brechungsindex sich von der ersten Schicht mit dem größten Durchmesser bis zur mittleren Schicht erhöht, wobei jede Schicht ausgehend von Gasen (24) ausgebildet wird, die im Inneren der Röhre (20) untereinander reagieren, und die Verhältnisse der Gase werden von einer Schicht zu einer anderen variiert, um den Index variieren zu lassen,
**dadurch gekennzeichnet**, **dass** die Einführungsgeschwindigkeit v für die Gase (24) in die Röhre (20) so gewählt wird, dass die Homogenität des radialen Indexprofils in Längsrichtung verbessert wird, wobei die Abscheidungen in einem Abstand vom Eingang der Röhre (20) bewirkt werden, der eine Funktion der Einführungsgeschwindigkeit v für die Gase und des Innenradius der Wand der Röhre (20) ist.

2. Verfahren nach Anspruch 1, **dadurch gekennzeichnet**, **dass** die Geschwindigkeit v für die Herstellung aller Schichten (26₁, ..., 26ₙ) im Wesentlichen die gleiche ist.

3. Verfahren nach Anspruch 1, **dadurch gekennzeichnet**, **dass** sich die Einführungsgeschwindigkeit v für die Gase mit dem Rang der hergestellten Schicht erhöht.

4. Verfahren nach einem der Ansprüche 1 bis 3, **dadurch gekennzeichnet**, **dass** die Röhre (20) aus Siliciumdioxid besteht.

5. Verfahren nach Anspruch 4, **dadurch gekennzeichnet**, **dass** die Gase ein Siliciumsalz, eine Salz eines dotierenden Produktes, insbesondere Germanium, und ein oxidierendes Produkt, vorzugsweise Sauerstoff, umfassen und dass die Menge des oxidierenden Produkts bei der Herstellung der verschiedenen Schichten variiert.

6. Verfahren nach Anspruch 5, **dadurch gekennzeichnet**, **dass** die Menge (40) der Salze mit dem Rang der Schicht abnimmt, die Menge (42) des oxidierenden Produkts auch mit dem Rang der Schicht abnimmt, aber in einem weniger großen Verhältnis als die Abnahme der Menge der Salze.

7. Verfahren nach Anspruch 4, **dadurch gekennzeichnet**, **dass** die Gase ein Siliciumsalz, ein Salz eines dotierenden Produktes und ein oxidierendes Produkt, wie Sauerstoff, umfassen und dass die Einführungsgeschwindigkeit für die Gase (24) unabhängig von der Menge (40, 44) der Salze von Silicium und dem dotierenden Produkt reguliert wird.

8. Verfahren nach einem der vorhergehenden Ansprüche, **dadurch gekennzeichnet**, **dass** den Gasen, die reagieren, ein neutrales Gas hinzugefügt wird.

9. Verfahren nach einem der vorhergehenden Ansprüche, **dadurch gekennzeichnet**, **dass** die Geschwindigkeit v so gewählt wird, dass die Abszisse (L₁) des Beginns aller Schichten im Wesentlichen konstant ist.

10. Vorform zur Herstellung eines Mehrmoden-Lichtwellenleiters mit einem Brechungsindex, der von seiner Mittel bis zu seinem Umfang variiert, wobei der Brechungsindex in der Mitte entlang der Achse (14) höher als am Umfang (16) ist, **dadurch gekennzeichnet**, **dass** diese Vorform in Längsrichtung zwei Teile (34 und 38) aufweist, wobei der erste Teil 34) ein Eingangskegel ist und der zweite Teil (38) ein Indexprofil (18) aufweist, das über seine gesamte Länge praktisch konstant ist.

11. Verfahren zur Herstellung eines Mehrmoden-Lichtwellenleiters (10), der einen Brechungsindex (n) aufweist, der entlang der Achse (14) der Faser maximal und an ihrem Umfang geringer ist, wobei dieses Verfahren insbesondere die folgenden Schritte umfasst:
im Inneren einer Röhre (20) werden aufeinanderfolgende Schichten (26₁, 26₂, ... 26ₙ) abgeschieden, so dass der Brechungsindex der ersten Schichten mit dem größten Durchmesser geringer als der Brechungsindex der mittleren Schichten ist, wobei jede Schicht ausgehend von Gasen (24) ausgebildet wird, die im Inneren der Röhre (20) untereinander reagieren, und die Verhältnisse der Gase werden variiert, um den Index variieren zu lassen,
**dadurch gekennzeichnet**, **dass** die Einführungsgeschwindigkeit v für die Gase (24) in die Röhre (20) so gewählt wird, dass die Homogenität des radialen Indexprofils in Längsrichtung verbessert wird, wobei die Abscheidungen in einem Abstand vom Eingang der Röhre (20) bewirkt werden, der eine Funktion der Einführungsgeschwindigkeit v für die Gase und des Innenradius der Wand der Röhre (20) ist.

## Claims

1. A process for fabricating a multimode optical fibre preform (10) having a maximum refractive index (n) along an axis (14) of the fibre and a lower refractive index at its periphery, said process including the following steps:
depositing successive layers (26₁, 26₂, ... 26ₙ) onto the interior of a tube (20) with the refractive index increasing from the first, larger diameter layer to the central layer, each layer being formed from gases (24) which react with each other inside the tube (20), and varying the proportions of the gases from one layer to another to vary the index,
**characterized in that** the velocity v at which the gases (24) are introduced into the tube (20) is chosen to improve the homogeneity of the radial index profile in the longitudinal direction, deposition being carried out at a distance from the entry of the tube (20) which is a function of said velocity v at which the gases are introduced and the internal radius of the wall of said tube (20).

2. The process according to claim 1 **characterized in that** the velocity v is maintained substantially the same for fabrication of all the layers (26₁, ..., 26ₙ).

3. The method according to claim 1 **characterized in that** the velocity v at which the gases are introduced increases with the rank of the layer fabricated.

4. The method according to any of claims 1 to 3 **characterized in that** the tube (20) is of silica.

5. The method according to claim 4 **characterized in that** the gases comprise a silicon salt, a doping product salt, for example a germanium salt, and an oxidizing product, preferably oxygen, and in that the flowrate of the oxidizing product varies during the fabrication of the various layers.

6. The process according to claim 5 **characterized in that** the flowrate (40) of the salts decreases with the rank of the layer and the flowrate (42) of the oxidizing product decreases with the rank of the layer but to a lesser degree than the decrease in the flowrate of the salts.

7. The process according to claim 4 **characterized in that** the gases comprise a silicon salt, a doping product salt and an oxidizing product such as oxygen and the velocity at which the gases (24) are introduced is controlled independently of the flowrate (40, 44) of the silicon salt and the doping product salt.

8. The process according to any of the previous claims **characterized in that** a neutral gas is added to the gases which react with each other.

9. The process according to any of the previous claims **characterized in that** the velocity v is chosen so that the abscissa (L₁) at which all the layers start is substantially constant.

10. Preform for fabricating a multimode optical fibre having a refractive index that varies from its centre to its periphery, the refractive index being higher at the centre, along the axis (14), than at the periphery (16), **characterized in that** said preform has two parts (34 and 38) in the longitudinal direction, the first part (34) constituting an entry cone and the second part (38) having an index profile (18) that is practically constant throughout its length.

11. Process for fabricating a multimode optical fibre (10) having a maximum refractive index (n) along the axis (14) of the fibre and a lower refractive index at its periphery, said process including the following steps:
depositing successive layers (26₁, 26₂, ... 26ₙ) on the interior of a tube (20) so that the refractive index of the first, larger diameter layers is lower than the refractive index of the central layers, each layer being formed from gases (24) that react with each other within the tube (20), and varying the proportions of the gases to vary the index,
**characterized in that** the velocity v at which the gases (24) are introduced into the tube (20) is chosen to improve the homogeneity of the radial index profile in the longitudinal direction, deposition being carried out at a distance from the entry of the tube (20) which is a function of said velocity v at which the gases are introduced and the internal radius of the wall of said tube (20).
